# EUROPEAN PATENT SPECIFICATION

(11) **EP 2 016 306 B1**
(45) Date of publication and mention of the grant of the patent: **14.12.2011**
(21) Application number: 07760610.1
(22) Date of filing: 13.04.2007
(51) Int. Cl.: F16H 7/08

(54) **RATCHETING TENSIONER WITH A SLIDING AND PIVOTING PAWL**
RATSCHEN-SPANNER MIT GLEITENDER UND SCHWENKBARER SPERRKLINKE
TENDEUR A CLIQUET COULISSANT ET PIVOTANT

(30) Priority: 08.05.2006 US 746659 P
(43) Date of publication of application: 21.01.2009
(73) Proprietor: BorgWarner, Inc., Auburn Hills, MI 48326-2872 (US)
(72) Inventor: MARKLEY, George L., Montour Falls, New York 14865 (US)
(74) Representative: Petruzziello, Aldo
(86) International application number: PCT/US2007/066584
(87) International publication number: WO 2007/133875

(56) References cited:
- DE-B- 1 212 383
- JP-A- 7 151 196
- JP-A- 9 060 696
- JP-U- 62 013 257
- US-A1- 2002 006 840

## Description

### REFERENCE TO RELATED APPLICATIONS

This application claims one or more inventions which were disclosed in Provisional Application Number 60/746,659, filed May 8, 2006, entitled "RATCHETING TENSIONER WITH A SLIDING AND PIVOTING PAWL". The benefit under 35 USC §119(e) of the United States provisional application is hereby claimed.

### BACKGROUND OF THE INVENTION

### FIELD OF THE INVENTION

The invention pertains to the field of tensioners. More particularly, the invention pertains to tensioners with a sliding and pivoting pawl.

### DESCRIPTION OF RELATED ART

DE 1212383 discloses a tensioner having the features of the preamble of claim 1.

In chain and belt tensioners, pistons are urged from their housings by a spring or a spring plus hydraulic pressure. Check valves are added to tensioners between the pressurized fluid source and the fluid chamber formed between the housing and the piston to prevent backflow of the hydraulic fluid out of the fluid chamber. The rate of leakage between the piston to the bore clearance allows the retraction of the piston as makeup fluid subsides or ceases. As the rate of leakage increases, the restriction or retraction of the piston lessens and as the rate of leakage decreases, the restriction or retraction of the piston increases. When chain load spikes or a loss of fluid pressure is present, retraction of the plunger occurs and if the retraction of the plunger is excessive, loss of chain control or other undesirable effects occur. Therefore, limiting the amount of piston retraction is desirable.

A ratchet device that is used to limit the piston retraction must allow the plunger to retract and reduce chain load when fluid pressure is reduced during engine shutdown, but not so much as to leave the chain uncontrolled during engine restart. The retraction of the piston is limited by the amount of backlash added to the ratchet.

Figure 1 shows a pivoting pawl ratchet tensioner 10 of U.S. Patent No. 4,874,352. The tensioner includes a tensioner housing 9 with a bore for receiving a hollow piston 3 with a rack 13 along its outer circumference and a pivoting ratchet pawl 12 biased towards the rack 13 by spring 11. The bore creates a fluid chamber 17 with the hollow piston 3. Passages 7, 8 in the housing 9 connect the fluid chamber 17 with a pressurized source of fluid. A check valve, including the check ball 15, seat 5, and retainer 14 is provided between the pressurized source and the fluid chamber 17, allowing fluid into the chamber 17 only. The piston is biased outward toward chain 1 to contact shoe 2 by spring 4. When the pawl teeth are intermeshing with the rack teeth 13 of the piston 3 and moving from one tooth to the next, the pawl 12 rotates against spring 11. One of the problems with the tensioner of U.S. Patent No. 4,874,352 is that the piston 3 rotates and ratchets with the rack 13 along the outer circumference of the piston 3 up until all of the teeth on the pawl 12 no longer mesh with piston's rack 13. In other words, the piston 3 can completely exit the housing 9, since a stop mechanism is not present.

Prior art Figure 2 shows a tensioner from U.S. Patent No. 6,244,981 that uses a ratchet device. The tensioner includes a housing 36 with a bore 34 for slidably receiving a hollow piston 24 that creates a fluid chamber with the bore 34. A passage in the housing connects the fluid chamber with a pressurized source of fluid. A check valve (not shown) is provided between the pressurized source and the fluid chamber, allowing fluid into the chamber only. The piston 24 is biased by a spring 28 in a protruding direction. The piston 24 contains a series of grooves 26 on its outer surface that are engaged by a pair of pawls 30, 32, located opposite each other in vertical slots in the bore 34. The pawls 30, 32, which have flats that aid in providing backlash, are held in place by circlips 22. One of the two pawls 30, 32 is located higher up on the bore 34 than the other. As the piston 24 extends it engages one of the pawls 30, 32, and then the other, providing limited retraction of the piston 24.

Figures 3a and 3b show a prior art tensioner from U.S. Patent No. 5,967,921. The tensioner 50 maintains tension on chain 57 wrapped around sprockets 54, 56 by pushing on a pivoting 51 tensioner arm 53. The tensioner 50 includes a housing 68 with a bore 72 for receiving a sleeve 64. The sleeve is fixedly attached to the bore in the housing. A hollow piston 55 is slidably received in the sleeve 64, creating a fluid chamber 74 with the sleeve 64. A check valve 60 comprising a valve member 62 biased by a valve spring 59 against a valve support member 58 and a seal member 61 connects the fluid chamber with a pressurized source of fluid through passage 81, and allows fluid into the fluid chamber only. The piston 55 is biased by spring 73 in a protruding direction from the housing 68. The piston 55 has a series of grooves 82 on its outer surface that are engaged by a clip 83 to prevent the piston 55 from retracting too far when the engine is stopped. The clip 83 is attached to the sleeve 64 or housing 68. A vent disk 79 may be present at the end of the fluid chamber, closest to the tip 63 of the piston 55, for the passage of air out of the tensioner.

Figure 4 shows a cartridge type tensioner from U.S. Patent No. 6,685,587. The tensioner has a cylinder or body 91 that slidably receives a piston 92 in a bore 93 of the cylinder 91. The cylinder has a head 94 and thread 95 for attaching to the engine block. The piston 92 is biased outward from the cylinder 91 by spring 96 and fluid. The fluid enters the bore 93 from a passage 108 attached to a source and moves through a check valve 99 to the bore. In order to prevent the uncontrolled reentry of the piston 92 into the cylinder 91, during a partial emptying of the bore 93 of fluid, the piston has at least one longitudinal rack 97 in which a toothed pad 98, biased by a spring 102, engages, passing through an aperture 109 of the cylinder. The toothed pad 98 is guided by a pad base 100 and slides in a corresponding seat 101 in the cylinder adjacent to the aperture 109.

### SUMMARY OF THE INVENTION

A tensioner with a piston is slidably received within a bore of the housing and has a plurality of grooves formed on its outer circumference. A fluid chamber is formed between the piston and the bore of the housing. A check valve is present in the fluid chamber to allow fluid from a source into the chamber only. A piston spring biases the piston in an outward direction from the bore. A rotating sliding pawl is received by a cutout in the housing and is pivotally and slidably attached to the housing by a through pin in a pair of mating slots. The pawl has a first protruding shoulder, a second shoulder, a teeth portion, and a hole defined between the first protruding shoulder and the second shoulder. The pawl is biased toward the grooves formed on the outer circumference of the piston by a spring received by a first hole in the housing adjacent to the cutout of the housing. The first end of the spring abuts with the plugged end of the first hole of the housing and the second end of the spring abuts with the rotating sliding pawl.

When hydraulic fluid pressure is absent or inadequate in the fluid chamber, and slack in the chain has decreased, the piston is biased inwards towards the housing by the chain. The shoulders of the grooves on the outer circumference of the piston apply a vertical force inwards towards the housing on the shoulders of the teeth of the pawl, rotating the pawl until the second protruding shoulder contacts the housing, preventing the piston from moving further inwards towards the housing.

When hydraulic fluid pressure is present or adequate in the fluid chamber, and slack in the chain has increased, the piston is biased outwards from the housing and as a result of the design and mesh of the pawl teeth and piston grooves, applies a vertical force outwards from the housing and a horizontal force towards the pawl relative to a centerline of the piston. The vertical force causes the pawl to rotate until the first protruding shoulder contacts the housing stopping further rotation. The horizontal force causes the pawl to slide perpendicular to the centerline of the piston against the spring to disengage the teeth of the pawl from the grooves on the piston, allowing further outwards movement of the piston from the housing.

The housing also has a pair of slots and a pair of second holes. The pair of slots receive the through pin, pivotally and slidably attaching the rotating sliding pawl to the housing. The pair of second holes are partially aligned with the hole of the pawl defined between the first protruding shoulder and the second shoulder. The front second hole receives an external pin, catching the hole of the pawl, sliding the pawl and the pawl teeth away from the piston bore until the pin can engage the rear second hole, locking the pawl away from the piston bore, for component assembly or piston resetting purposes.

Ejection of the piston from the bore of the housing is prevented when the pawl rotates, such that the first protruding shoulder contacts the housing and the teeth portion closest to the second shoulder engage a shoulder in a stop groove on the outer circumference of the piston.

The tensioner is placed in a shipping or assembly position when an external pin is received between the first protruding shoulder and the housing, for locking the pawl into position.

### BRIEF DESCRIPTION OF THE DRAWING

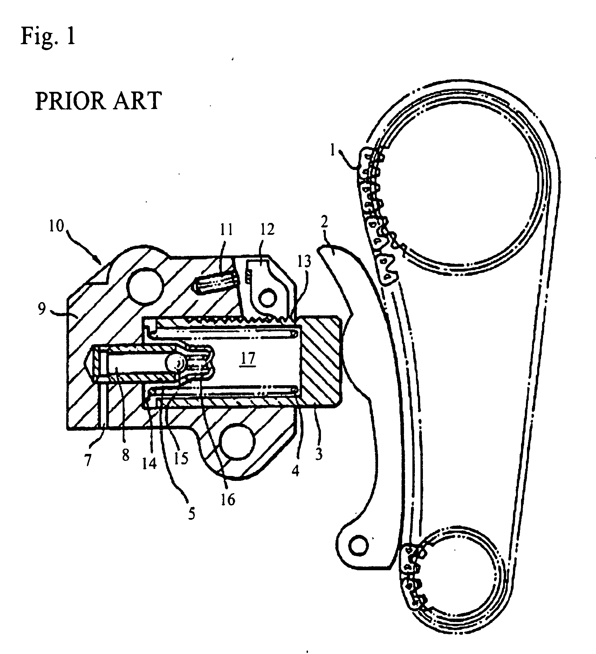

- Fig. 1: shows a prior art tensioner.

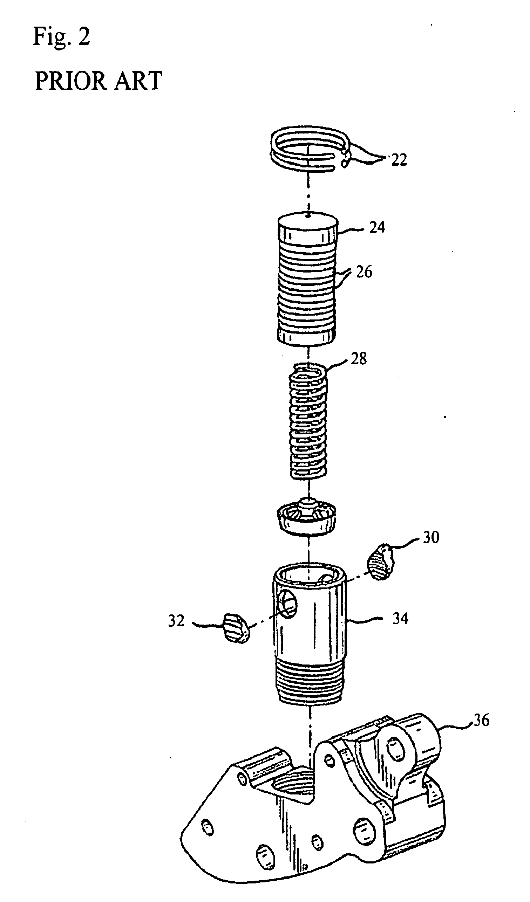

- Fig. 2: shows another prior art tensioner.

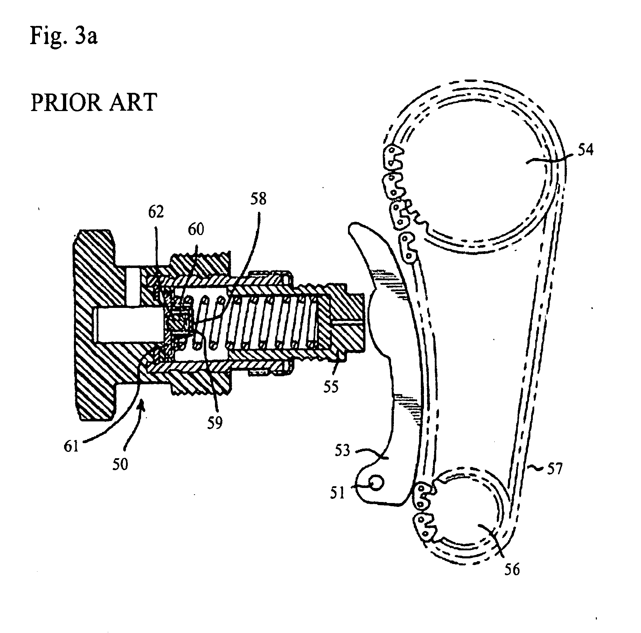

- Fig. 3a: shows a prior art tensioner.

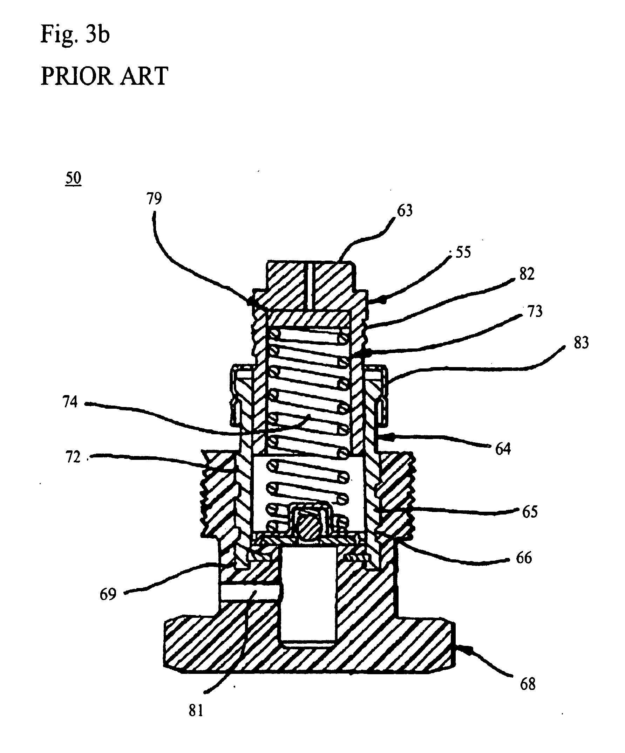

- Fig. 3b: shows a close-up of the tensioner of Figure 3a.

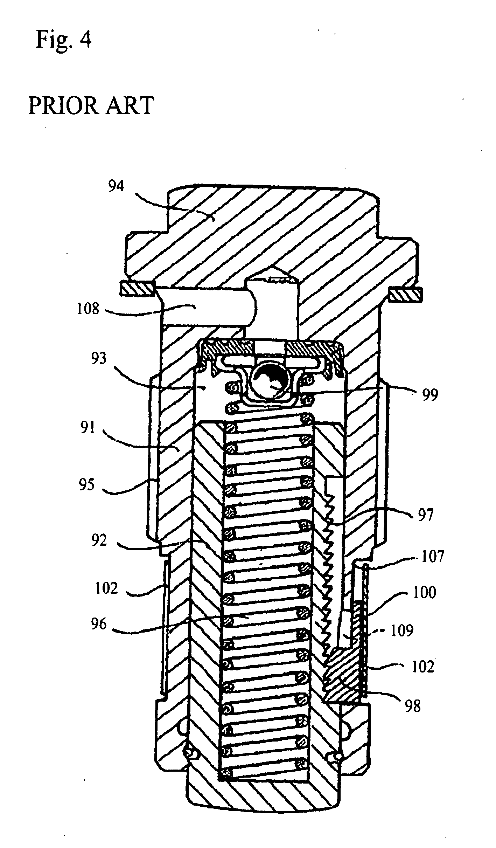

- Fig. 4: shows another prior art hydraulic tensioner.
- Fig. 5: shows an exterior view of the tensioner of the present invention, pinned for shipping and/or assembly.
- Fig. 6: shows a section through the center of the piston in Figure 5.
- Fig. 7: shows a sectional view of the tensioner of the present invention with the pawl pivoted and slid away from the piston, pinned in the disengaged state.
- Fig. 8: shows an exterior view of the tensioner position shown in Figure 7.
- Fig. 9: shows a sectional view of the tensioner of the present invention with the pawl having pivoted for providing backlash and ratcheting against a spring.
- Fig. 10: shows a sectional view of the tensioner of the present invention with the pawl ratcheted to the end of the piston's stroke.
- Fig. 11: shows another sectional view of the tensioner of the present invention with the pawl ratcheted to the end of the piston's stroke.
- Fig. 12: shows a schematic of the housing without the piston or the pawl present.
- Fig. 13: shows a close-up of the meshing between the teeth of the pawl and the grooves on the piston and the forces applied when hydraulic fluid pressure is present.
- Fig. 14: shows a close-up of the meshing between the teeth of the pawl and the grooves on the piston and the force applies when hydraulic fluid pressure is not adequate or present.

### DETAILED DESCRIPTION OF THE INVENTION

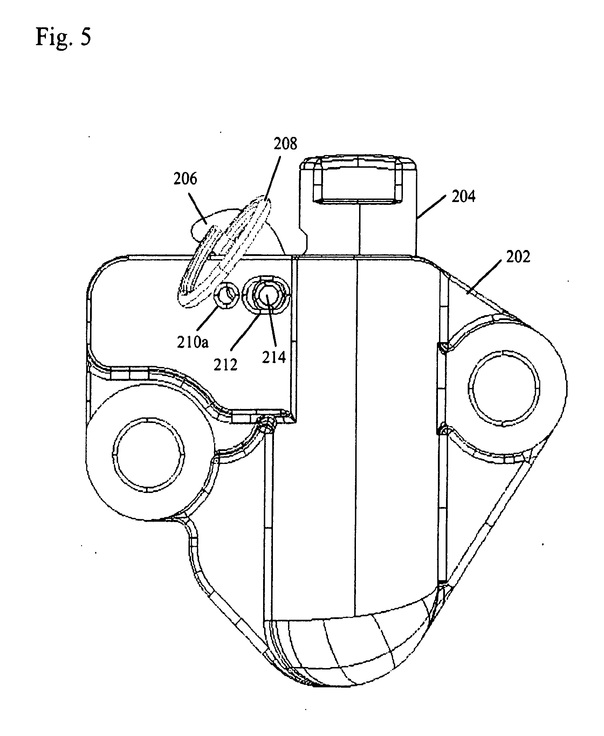

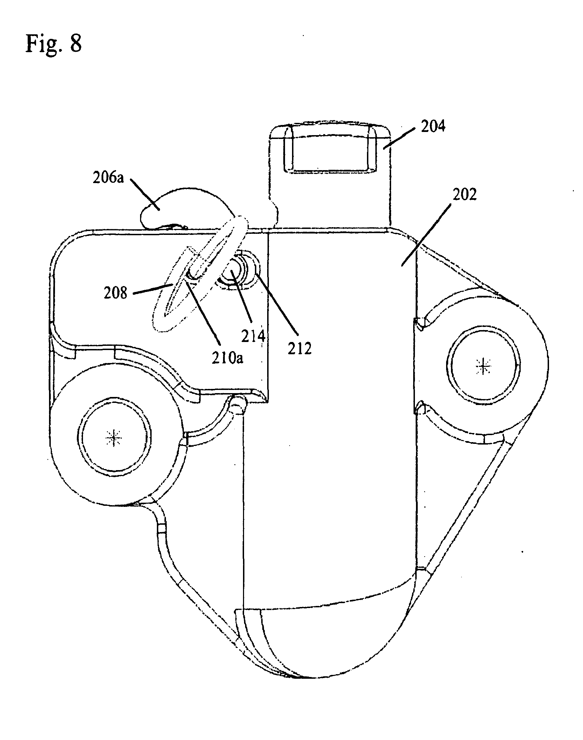

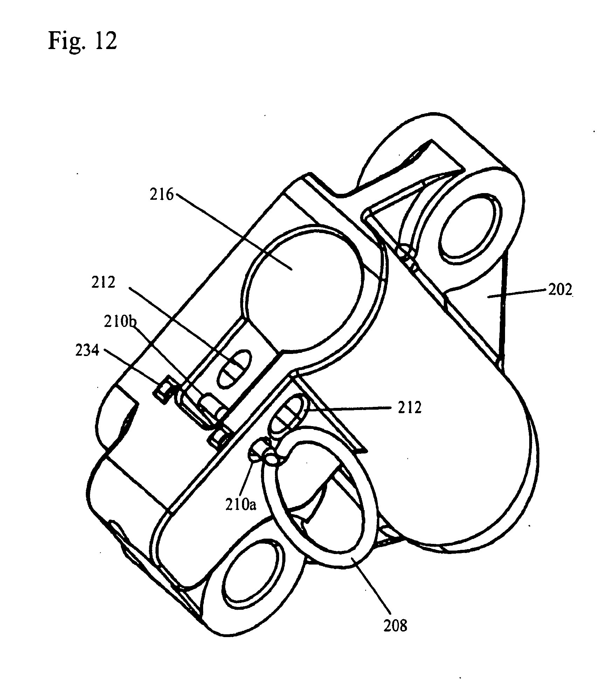

Figures 5 through 13 show the tensioner of the present invention. The tensioner includes a housing 202 having a cutout 228 for receiving a rotating, sliding pawl 206 and a bore 216 for slidably receiving a hollow piston 204 that creates a fluid chamber 219 with the bore 216. A passage 224 in the housing 202 connects the fluid chamber 219 with a pressurized source of fluid. A check valve 221 comprising a check ball 220 and a seat 222, allows fluid into the fluid chamber 219 only. The piston 204 is biased by a piston spring 218 in a protruding direction from the housing 202 toward a chain or belt (not shown). The piston 204 contains a series of grooves 204b around or across, at least a portion of the outer circumference of the piston 204 for ratcheting with the rotating, sliding pawl 206. At least one of the grooves acts as a stop 204d, to help prevent the ejection of the piston 204 from the housing 202.

The rotating, sliding pawl 206 is rotatably attached to the housing by a pin 214. The pawl 206 has a first protruding shoulder 206a, a second shoulder 206b, a teeth portion 206c, with a stop tooth 206e, and a pawl hole 206d between the first protruding shoulder 206a and the second shoulder 206b. The teeth of the teeth portion 206c are preferably wedge-shaped. The stop tooth 206e of the pawl 206 only engages the shoulder 204e of the stop groove 204d of the piston 204. The rotating, sliding pawl 206 is biased toward the grooves 204b on the outer circumference of the piston 204 by spring 226 received in a first hole 211 adjacent to the cutout 228 of the housing 202. Within the hole 211 of the housing 202 is a press fit ball 232 in which the inner end of the spring 226 abuts against. The opposite end of the spring 226 abuts against the pawl 206.

The housing 202 also contains a pair of aligned slots 212 for receiving a through pin 214, which pivotally connects the pawl to the housing and a pair of second holes 210a, 210b that are aligned and may receive an external pin 208. The external pin preferably has a tapered end. The pair of second holes 210a, 210b are partially aligned with a pawl hole 206d defined by the pawl 206 in between the first protruding shoulder 206a and the second shoulder 206b.

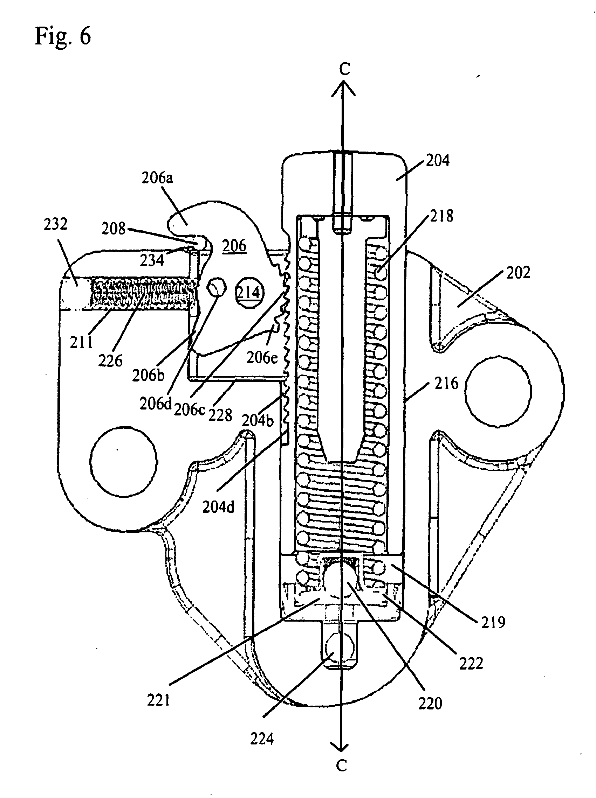

Figures 5 and 6 show the tensioner pinned for shipping or assembly to the engine. In this position, a pin 208 is placed between a stop 234 of the housing 202 and the first protruding shoulder 206a of the rotating pawl 206. By placing the pin 208 between the first protruding shoulder 206a and the stop 234 of the housing 202, the pawl 206 cannot rotate or slide away from the grooves 204b on the outer circumference of the piston 204. The teeth 206c of the pawl 206 are locked into contact with the grooves 204b on the outer circumference of the piston 204 by the contact of the second protruding shoulder 206b against the wall of the cutout 228 and the pin 208 between the shoulder 206a and the stop 234 of the housing 202. The intermeshing of the teeth 206c of the pawl and grooves 204b on the piston, hold the piston in place relative to the housing 202.

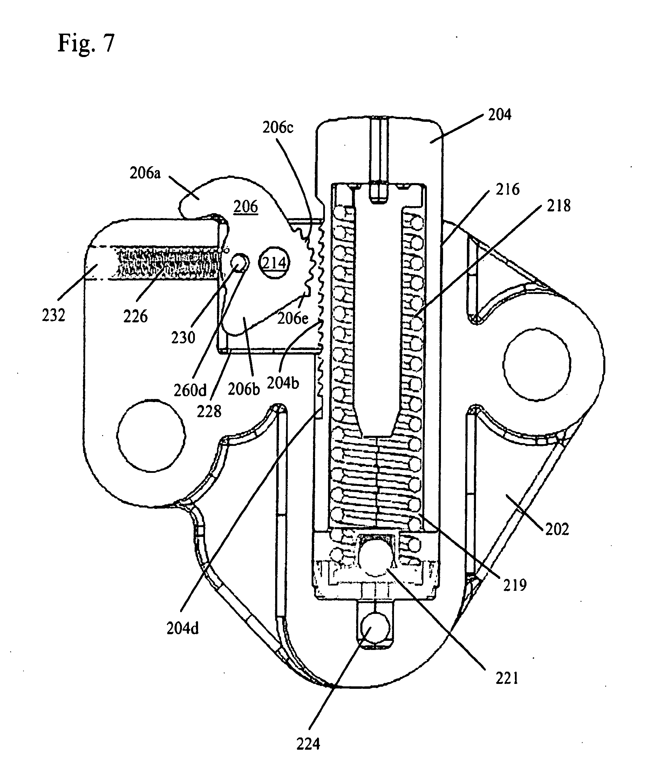

Figures 7, 8, and 12 show the tensioner in a position in which the pawl 206 is pinned in a disengaged state and is pivoted away from the piston 204. The tensioner may be placed in this position during assembly of the tensioner, allowing the piston 204 to be placed in the housing 202 after the pawl 206 has already been assembled and pivotally attached to the housing 202. In this position, a pin 208 is placed in the front second hole 210a of the housing 202 and the tapered end of the pin catches pawl hole 206d, sliding the pawl 206 against spring 226, moving the pawl teeth 206c away from the piston 204 and its outer grooves 204b and locking the pawl in this position with the pin 208 engaging the rear second hole 210b.

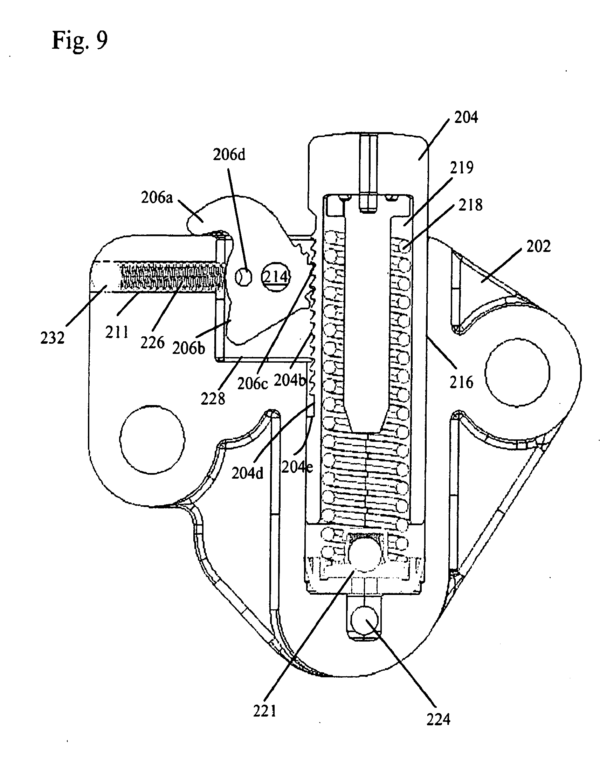

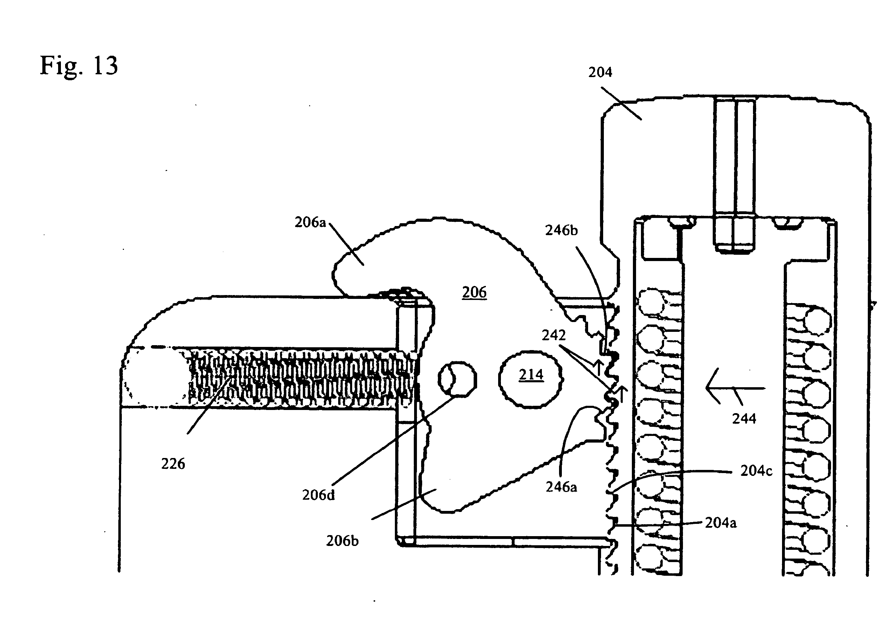

When sufficient hydraulic fluid pressure is present in the chamber 219, the teeth 206c of the pawl 206 ratchet with the grooves 204b on the outer circumference of the piston 204, and do not impede the movement of the piston 204 outwards from the housing 202. Referring to Figures 9 and 13, as the piston 204 is biased outwards from the housing 202, the grooves 204b meshed or ratcheted with the teeth portion 206c apply a force, shown by arrow 242, in a direction outwards from the housing 202 on the ramp portion 246a of the teeth of the pawl 206, causing the pawl 206 to rotate the first protruding shoulder 206a towards the housing 202. Once the first protruding shoulder 206a contacts the housing 202, the force of the outwards movement of the piston 204 becomes horizontal or perpendicular to the piston's centerline C, shown by arrow 244 and is applied to the ramps 246a of the teeth on the pawl, since the pawl 206 cannot rotate any further in the direction of arrow 242 and the horizontal force 244 is greater than the spring force of the spring 226, and the pawl 206 slides in a perpendicular direction away from the piston's centerline C or in the direction shown by arrow 244. The horizontal force 244 is just great enough so that the teeth portion 206c of the pawl 206 may disengage or no longer mesh with the grooves 204b on the piston 204, allowing the piston 204 to move outwards from the housing 202 at least one groove worth. The spring 226 then biases the pawl teeth portion 206c of the pawl 206 back into contact with the grooves 204b on the piston 204, completing the ratcheting of one piston groove with one pawl tooth. The spring force of the spring 226 insures remeshing of the teeth 206c and the grooves 204b after fast ratcheting, based on mass, acceleration and inertia, yet at the same time does not inhibit the outward movement of the piston 204.

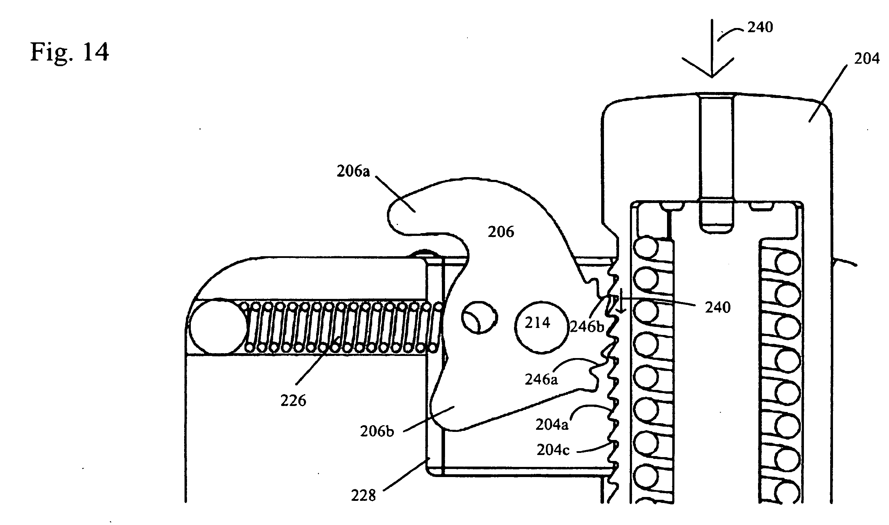

During engine start, stop, or during an oil pump failure/malfunction, when hydraulic fluid pressure is not present or adequate in the chamber 219 and spring 218 cannot handle tension spikes from the decreased slack in the chain, the pawl 206 meshes with and prevents the piston 204 from moving inwards towards the housing 202. Referring to Figure 14, the piston 204 is biased inwards toward the housing 202 by a force, shown by arrow 240, the pawl teeth 206c prevent the piston 204 from moving inwards towards the housing 202. The force shown by arrow 240, rotates the pawl so that the second protruding shoulder 206b contacts the housing. The teeth 206c of the pawl mesh with the grooves 204b on the piston 204, such that the shoulder 204c of the groove 204b contacts the shoulder 246b of the tooth of the pawl 206 preventing inwards movement towards the housing.

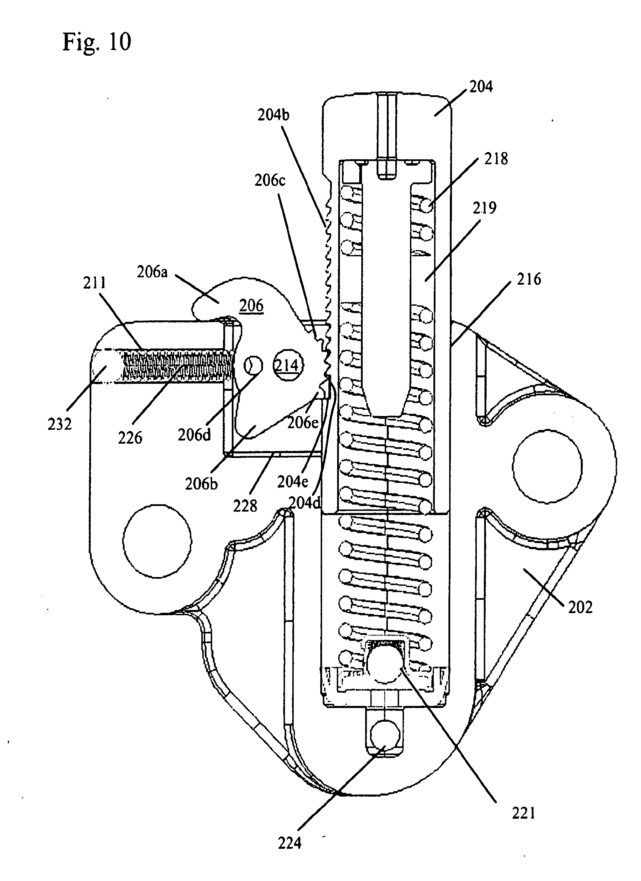

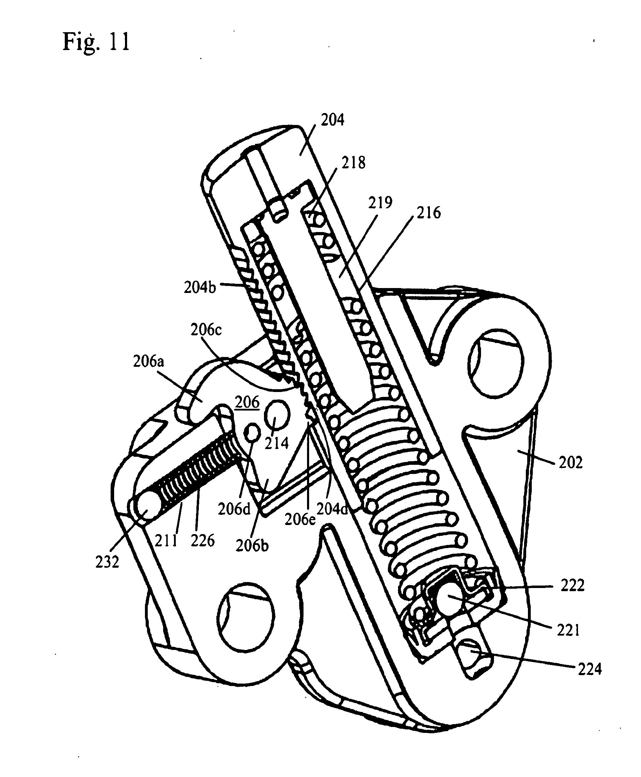

Figures 10 and 11 show the tensioner ratcheted to the end of the piston's stroke. In this position, the pawl 206 has rotated so that the first protruding shoulder 206a is in contact with the housing 202 and the bottom shoulder of the stop tooth 206e engages with a shoulder of the stop groove 204d on the outer circumference of the piston 204. The pawl 206 does not slide away from the piston 204, against spring 226, due to the lack of a force 244. Force 244 does not exist since any further protruding movement of the piston 204 from the housing 202 is prevented by the first protruding shoulder 206a of the pawl 206 contacting the housing 202 and the engagement of the stop tooth 206e with the shoulder 204e of the stop groove 204d of the piston, preventing the piston 204 from ejecting from the bore 216 of the housing 202.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A tensioner for tensioning a chain comprising:
a housing (202) having a bore (216);
a piston (204) slidably received within the bore (216) having a plurality of grooves (204b) each comprising a groove shoulder (204c) and a groove ramp (204a), formed along at least a portion of an outer circumference of the piston (204),
a piston spring (218) biasing the piston (204) in an outward direction from the bore (216); and
a rotating sliding pawl (206) received by a cutout (228) in the housing (202), the pawl has a first protruding shoulder (206a), a second shoulder (206b), and a pawl hole (206d) defined between the first protruding shoulder (206a) and the second shoulder (206b),
the tensioner being **characterized in that** the piston forms a fluid chamber (219) with the bore (216); the housing contains a pair of aligned slots (212);
the pawl (206) is pivotally and slidably attached to the housing (202) by a through pin (214) received in the aligned slots (212) and has a teeth portion (206c) comprising a plurality of teeth each having a tooth shoulder (246b) and a tooth ramp (246a), the pawl (206) being biased toward the grooves (204b) on the outer circumference of the piston (204) by a spring (226);
wherein when hydraulic fluid pressure is absent or inadequate in the fluid chamber (219), and slack in the chain has decreased, the piston (204) is biased inwards towards the housing (202) by the chain and the groove shoulders (204c) apply a force inwards towards the housing (202) on the teeth shoulders (246b) of the pawl (206), rotating the pawl (206) until the second protruding shoulder (206b) contacts the housing (202), such that the piston (204) is prevented from moving further inwards towards the housing (202).

2. The tensioner of claim 1, further comprising a check valve (221) in the fluid chamber (219).

3. The tensioner of claim 1, wherein the spring (226) biasing the pawl (206) into engagement with the grooves (204b) on the outer circumference of the piston (204) has a first end received by a first hole (211) defined by the housing (202), adjacent to the cutout (228) of the housing (202), and a second end abutting against the rotating, sliding pawl (206).

4. The tensioner of claim 1, wherein the housing (202) further defines a pair of slots (212) and a pair of second holes (210a, 210b), the pair of slots (212) receiving the through pin (214) pivotally attaching the rotating sliding pawl (206) to the housing (202), and the pair of second holes (210a, 210b) being partially aligned with the pawl hole (206d), defined between the first protruding shoulder (206a) and the second shoulder (206b) of the pawl (206).

5. The tensioner of claim 4, wherein the pair of second holes (210a, 210b) receive an external pin (208), catching the hole (206d) of the pawl (206), sliding the pawl (206) and the pawl teeth (206c) away from outer grooves (204b) on the outer circumference of the piston (204).

6. The tensioner of claim 1, wherein when hydraulic fluid pressure is present or adequate in the fluid chamber (219), and slack in the chain has increased the piston (204) is biased outwards from the housing (202) and applies a force parallel to the piston's centerline (c) outwards from the housing (202) and a force perpendicular to the piston's centerline (c) towards the pawl (206) relative to a centerline of the piston (204) on the tooth ramp (246a), such that the force parallel to the piston's centerline (c) rotates the pawl (206) until the first protruding shoulder (206a) contacts the housing (202) and the force perpendicular to the piston's centerline (c) slides the pawl (206) perpendicular to the centerline of the piston (204) against the spring (226) to disengage the teeth (206c) of the pawl (206) from the grooves (204b) on the piston (204), allowing outwards movement of the piston (204) from the housing (202).

7. The tensioner of claim 1, wherein at least one of the grooves (204b) on the outer circumference of the piston is a stop groove (204d).

8. The tensioner of claim 7, wherein ejection of the piston (204) from the bore (216) of the housing (202) is prevented by the engagement of a tooth (206e) of the tooth portion (206c) of the pawl with a shoulder (204e) of the stop groove (204d) on the outer circumference of the piston (204).

9. The tensioner of claim 1, further comprising an external pin (208) received between the first protruding shoulder (206a) and a stop (234) on the housing (202) for locking the tensioner in a shipping position.

10. The tensioner of claim 1, wherein backlash of the tensioner is a combination of a distance of rotation between the first protruding shoulder (206a) and the housing (202) and a distance of rotation between the second shoulder (206b) and the housing (202).

## Patentansprüche

1. Spanner zum Spannen einer Kette, der Folgendes umfasst:
ein Gehäuse (202) mit einer Bohrung (216);
ein innerhalb der Bohrung (216) gleitend aufgenommener Kolben (204) mit mehreren Nuten (204b), die jeweils eine Nutschulter (204c) und eine Nutrampe (204a) umfassen, die mindestens entlang einem Abschnitt eines äußeren Umfangs des Kolbens (204) ausgebildet sind;
eine Kolbenfeder (218), die den Kolben (204) von der Bohrung (216) aus nach außen vorspannt; und
eine drehbare gleitende Klinke (206), die von einer Ausnehmung (228) im Gehäuse (202) aufgenommen wird, wobei die Klinke eine erste vorspringende Schulter (206a), eine zweite Schulter (206b) sowie ein zwischen der ersten vorspringenden Schulter (206a) und der zweiten Schulter (206b) definiertes Klinkenloch (206d) aufweist,
wobei der Spanner **dadurch gekennzeichnet ist, dass** der Kolben eine Fluidkammer (219) mit der Bohrung (216) bildet und dass das Gehäuse ein Paar ausgerichtete Schlitze (212) aufweist;
wobei die Klinke (206) schwenkbar und gleitend am Gehäuse (202) durch einen durchgehenden Stift (214) befestigt ist, der von den ausgerichteten Schlitzen (212) aufgenommen wird und einen Zahnabschnitt (206c) hat, der mehrere Zähne umfasst, die jeweils eine Zahnschulter (246b) und eine Zahnrampe (246a) haben, wobei die Klinke (206) zu den Nuten (204b) am äußeren Umfang des Kolbens (204) hin durch eine Feder (226) vorgespannt wird;
wobei, wenn Hydraulikfluiddruck in der Fluidkammer (219) nicht vorhanden oder unzureichend ist und der Durchhang in der Kette abgenommen hat, der Kolben (204) nach innen hin zum Gehäuse (202) durch die Kette vorgespannt wird und die Nutschultern (204c) eine Kraft nach innen hin zum Gehäuse (202) auf die Zahnschultern (246b) der Klinke (206) ausüben, so dass die Klinke (206) gedreht wird, bis die zweite vorspringende Schulter (206b) das Gehäuse (202) berührt, so dass verhindert wird, dass sich der Kolben (204) weiter nach innen hin zum Gehäuse (202) bewegen kann.

2. Spanner nach Anspruch 1, der weiterhin ein Absperrventil (221) in der Fluidkammer (219) umfasst.

3. Spanner nach Anspruch 1, bei dem die Feder (226), die die Klinke (206) in Eingriff mit den Nuten (204b) am äußeren Umfang des Kolbens (204) vorspannt, ein erstes Ende, das von einem durch das Gehäuse (202) definierten ersten Loch (211) angrenzend an die Ausnehmung (228) des Gehäuses (202) aufgenommen wird, und ein zweites Ende hat, das an die drehbare gleitende Klinke (206) anstößt.

4. Spanner nach Anspruch 1, bei dem das Gehäuse (202) weiterhin ein Paar Schlitze (212) und ein Paar zweite Löcher (210a, 210b) definiert, wobei das Paar Schlitze (212) den durchgehenden Stift (214) aufnimmt, der die drehbare gleitende Klinke (206) schwenkbar am Gehäuse (202) befestigt, und wobei das Paar zweite Löcher (210a, 210b) teilweise zum Klinkenloch (206d) ausgerichtet ist, das zwischen der ersten vorspringenden Schulter (206a) und der zweiten Schulter (206b) der Klinke (206) definiert ist.

5. Spanner nach Anspruch 4, bei dem das Paar zweite Löcher (210a, 210b) einen externen Stift (208) aufnimmt, wodurch das Loch (206d) der Klinke (206) arretiert sowie die Klinke (206) und die Klinkenzähne (206c) gleitend weg von den äußeren Nuten (204b) am äußeren Umfang des Kolbens (204) bewegt werden.

6. Spanner nach Anspruch 1, bei dem, wenn Hydraulikfluiddruck in der Fluidkammer (219) vorhanden oder ausreichend ist und der Durchhang in der Kette zugenommen hat, der Kolben (204) vom Gehäuse (202) aus nach außen vorgespannt wird und eine Kraft parallel zur Kolbenmittelachse (C) vom Gehäuse (202) aus nach außen sowie eine Kraft senkrecht zur Kolbenmittelachse (C) hin zur Klinke (206) im Verhältnis zu einer Mittelachse des Kolbens (204) auf die Zahnrampe (246a) ausübt, so dass die Kraft parallel zur Kolbenmittelachse (C) die Klinke (206) dreht, bis die erste vorspringende Schulter (206a) das Gehäuse (202) berührt und die Kraft senkrecht zur Kolbenmittelachse (C) die Klinke (206) senkrecht zur Mittelachse des Kolbens (204) gegen die Feder (226) gleitend bewegt, um die Zähne (206c) der Klinke (206) aus den Nuten (204b) am Kolben (204) zu lösen, so dass sich der Kolben (204) vom Gehäuse (202) aus nach außen bewegen kann.

7. Spanner nach Anspruch 1, bei dem mindestens eine der Nuten (204b) am äußeren Umfang des Kolbens eine Anschlagnut (204d) ist.

8. Spanner nach Anspruch 7, bei dem ein Ausrücken des Kolbens (204) aus der Bohrung (216) des Gehäuses (202) durch das Eingreifen eines Zahnes (206e) des Zahnabschnitts (206c) der Klinke in eine Schulter (204e) der Anschlagnut (204d) am äußeren Umfang des Kolbens (204) verhindert wird.

9. Spanner nach Anspruch 1, der weiterhin einen externen Stift (208) umfasst, der zwischen der ersten vorspringenden Schulter (206a) und einem Anschlag (234) am Gehäuse (202) aufgenommen wird, um den Spanner in einer Transportposition zu verriegeln,

10. Spanner nach Anspruch 1, bei dem das freie Spiel des Spanners eine Kombination aus einer Drehdistanz zwischen der ersten vorspringenden Schulter (206a) und dem Gehäuse (202) und einer Drehdistanz zwischen der zweiten Schulter (206b) und dem Gehäuse (202) ist.

## Revendications

1. Tendeur pour tendre une chaîne, comprenant:
un boîtier (202) comportant un alésage (216);
un piston (204) qui est reçu d'une façon coulissante à l'intérieur de l'alésage (216) comprenant une pluralité de rainures (204b) qui présentent chacune un épaulement de rainure (204c) et une rampe de rainure (204a), qui sont formées le long d'au moins une partie d'une circonférence extérieure du piston (204);
un ressort de piston (218) qui pousse le piston (204) dans une direction vers l'extérieur à partir de l'alésage (216); et
un cliquet rotatif coulissant (206) qui est reçu par une découpe (228) dans le boîtier (202), le cliquet comprend un premier épaulement saillant (206a), un deuxième épaulement (206b), et un trou de cliquet (206d) qui est défini entre le premier épaulement saillant (206a) et le deuxième épaulement (206b),
le tendeur étant **caractérisé en ce que** le piston forme une chambre de fluide (219) avec l'alésage (216); le boîtier comporte une paire de fentes alignées (212); le cliquet (206) est attaché de façon pivotante et coulissante au boîtier (202) par une broche traversante (214) qui est reçue dans les fentes alignées (212), et comprend une partie dentée (206c) constituée d'une pluralité de dents qui présentent chacune un épaulement de dent (246b) et une rampe de dents (246a), le cliquet (206) étant poussé en direction des rainures (204b) sur la circonférence extérieure du piston (204) par un ressort (226),
dans lequel, lorsque la pression de fluide hydraulique est absente ou inadéquate dans la chambre de fluide (219), et que le mou de la chaîne a diminué, le piston (204) est poussé vers l'intérieur en direction du boîtier (202) par la chaîne, et les épaulements de rainure (204c) appliquent une force vers l'intérieur en direction du boîtier (202) sur les épaulements de dent (246b) du cliquet (206), faisant tourner le cliquet (206) jusqu'à ce que le deuxième épaulement saillant (206b) entre en contact avec le boîtier (202), de telle sorte que le piston (204) soit empêché de se déplacer davantage vers l'intérieur en direction du boîtier (202).

2. Tendeur selon la revendication 1, comprenant en outre un clapet anti-retour (221) dans la chambre de fluide (219).

3. Tendeur selon la revendication 1, dans lequel le ressort (226) qui pousse le cliquet (206) en engagement avec les rainures (204b) sur la circonférence extérieure du piston (204) présente une première extrémité qui est reçue par un premier trou (211) qui est défini par le boîtier (202), à proximité de la découpe (228) du boîtier (202), et une deuxième extrémité qui bute contre le cliquet rotatif coulissant (206).

4. Tendeur selon la revendication 1, dans lequel le boîtier (202) définit en outre une paire de fentes (212) et une paire de deuxièmes trous (210a, 21'0b), la paire de fentes (212) recevant la broche traversante (214) pour attacher de façon pivotante le cliquet rotatif coulissant (206) au boîtier (202), et la paire de deuxièmes trous (210a, 210b) étant partiellement alignée avec le trou de cliquet (206d) qui est défini entre le premier épaulement saillant (206a) et le deuxième épaulement (206b) du cliquet (206).

5. Tendeur selon la revendication 4, dans lequel les trous de la paire de deuxièmes trous (210a, 210b) reçoivent une broche externe (208), qui accroche le trou (206d) du cliquet (206), faisant coulisser le cliquet (206) et les dents de cliquet (206c) à l'écart des rainures extérieures (204b) sur la circonférence du piston (204).

6. Tendeur selon la revendication 1, dans lequel lorsqu'une pression de fluide hydraulique est présente ou adéquate dans la chambre de fluide (219), et que le mou de la chaîne a augmenté, le piston (204) est poussé vers l'extérieur du boîtier (202) et applique une force parallèle à l'axe médian (C) du piston vers l'extérieur à partir du boîtier (202), et une force perpendiculaire à l'axe médian (C) du piston en direction du cliquet (206) par rapport à un axe médian du piston (204) sur la rampe de dents (246a), de telle sorte que la force parallèle à l'axe médian (C) du piston fasse tourner le cliquet (206) jusqu'à ce que le premier épaulement saillant (206a) entre en contact avec le boîtier (202), et que la force perpendiculaire à l'axe médian (C) du piston fasse coulisser le cliquet (206) perpendiculairement à l'axe médian du piston (204) contre le ressort (226) afin de désengager les dents (206c) du cliquet (206) des rainures (204b) sur le piston (204), permettant un déplacement vers l'extérieur du piston (204) à partir du boîtier (202).

7. Tendeur selon la revendication 1, dans lequel au moins une des rainures (204b) sur la circonférence extérieure du piston est une rainure d'arrêt (204d).

8. Tendeur selon la revendication 7, dans lequel l'éjection du piston (204) hors de l'alésage (216) du boîtier (202) est empêchée par l'engagement d'une dent (206e) de la partie dentée (206c) du cliquet avec un épaulement (204e) de la rainure d'arrêt (204d) sur la circonférence extérieure du piston (204).

9. Tendeur selon la revendication 1, comprenant en outre une broche externe (208) qui est reçue entre le premier épaulement saillant (206a) et un arrêt (234) sur le boîtier (202) afin de verrouiller le tendeur dans une position d'expédition.

10. Tendeur selon la revendication 1, dans lequel un mou du tendeur est une combinaison d'une distance de rotation entre le premier épaulement saillant (206a) et le boîtier (202) et d'une distance de rotation entre le deuxième épaulement (206b) et le boîtier (202).
